Europäisches Patentamt

European Patent Office

Office européen des brevets

(19)

(11) Publication number: **0 125 672**
**B1**

(12) **EUROPEAN PATENT SPECIFICATION**

(45) Date of publication of patent specification: **31.08.88**

(51) Int. Cl.⁴: **H 01 M 4/22, H 01 M 2/02**

(21) Application number: **84105417.4**

(22) Date of filing: **12.05.84**

(54) **Basket of plastic material for the processing of the plates for dry-charge batteries.**

(30) Priority: **17.05.83 IT 6428783 u**

(43) Date of publication of application:
**21.11.84 Bulletin 84/47**

(45) Publication of the grant of the patent:
**31.08.88 Bulletin 88/35**

(84) Designated Contracting States:
**AT BE CH DE FR GB LI NL SE**

(56) References cited:
**DE-C- 167 693**
**GB-A-1 135 733**
**US-A-1 633 354**
**US-A-2 767 951**
**US-A-3 463 343**

(73) Proprietor: **Stocchiero, Olimpio**
**4 Via Kennedy**
**I-36050 Montorso Vicentino (IT)**

(72) Inventor: **Stocchiero, Olimpio**
**4 Via Kennedy**
**I-36050 Montorso Vicentino (IT)**

(74) Representative: **Bonini, Ercole**
**Corso Fogazzaro, 8**
**I-36100 Vicenza (IT)**

**The file contains technical information
submitted after the application was filed and
not included in this specification**

Courier Press, Leamington Spa, England.

## Description

The invention concerns a basket of plastic material especially suited for the processing of the plates for dry-charge batteries, including two equal plates in a comb shape with vertical slots, joined with each other by means of screws and adjustable in different positions.

The plates which form the elements of industrial batteries undergo an electro-chemical charging treatment in plating vats, where the plates are made electrically active by means of the passage of electric power, which is brought about by the presence of an electrolyte liquid. The industrial processing foresees the immersion in the electrolyte of a certain number of plates assembled in suitable plastic baskets, suitably spaced the one from the other and with the surface to be treated as free as possible, so as to avoid a shielding which would prevent the treatment of the covered areas.

The known baskets generally consist of four vertical, stiff walls being perpendicular to one another, where two opposite walls present some vertical and parallel comb-shaped slots into which the plates are inserted, while the other two walls only function as spacers and as connecting elements between one comb-shaped wall and the next.

Since there are plates with unified dimensions, which, however, are varied both in height and in width, the known baskets foresee one or more vertical slots in the lateral connecting walls, into which another comb-shaped plastic plate is inserted when plates having a width smaller than the maximum one are to be treated.

The present invention has been developed with the purpose of eliminating the need for a basket which foresees the use of intermediate diaphragms for the processing of plates having a width which is smaller than the maximum width of the basket.

The purpose is achieved by means of a basket, consisting of two equal plates having a predominantly flat surface and supporting multiple parallel slots, each plate having four profiled members which are perpendicular to the main surface and are arranged at its corners and which are bound to one another by a screw-and-slot type of junction.

An adjustable container is described in the USA patent 3 463 343, in which the basket is formed by two adjustable telescopic container sections, but the sections are different and two different dies are needed to make this basket by a moulding process.

One of the advantages obtained with the present invention is that the basket can house plates for batteries of any width comprised between the minimum and the maximum opening of the basket, even those having non unified dimensions, since the locking between the corresponding segments which are joined together, can be made by positioning the screws at any intermediate point inside the slot being present in one of the two segments which fit into each other. One more advantage derives from the fact that the treatment of plates of batteries having reduced widths reduce the overall dimensions of the basket and, as a consequence, a larger number of plates can be treated at the same time, since it is possible to dip a larger number of baskets in the treatment vat.

Another advantage of the present construction arises from the fact that these baskets, when not used, occupy a reduced total space, since it is possible to position them so, that the two elements which form them are as near as possible to each other.

Other details and other functional advantages will be better pointed out in the description of a preferred form of execution, which is given by way of example only, but is not meant to be limiting, illustrated in the enclosed drawings, where:

Fig. 1 represents in perspective view the two equal plates which, when joined together, form the adjustable basket

Fig. 2 is a cross-section of the already formed basket with the joining details being emphasized.

Fig. 3 shows in perspective view the special form of two profiled member which are joined together and the organ connecting them.

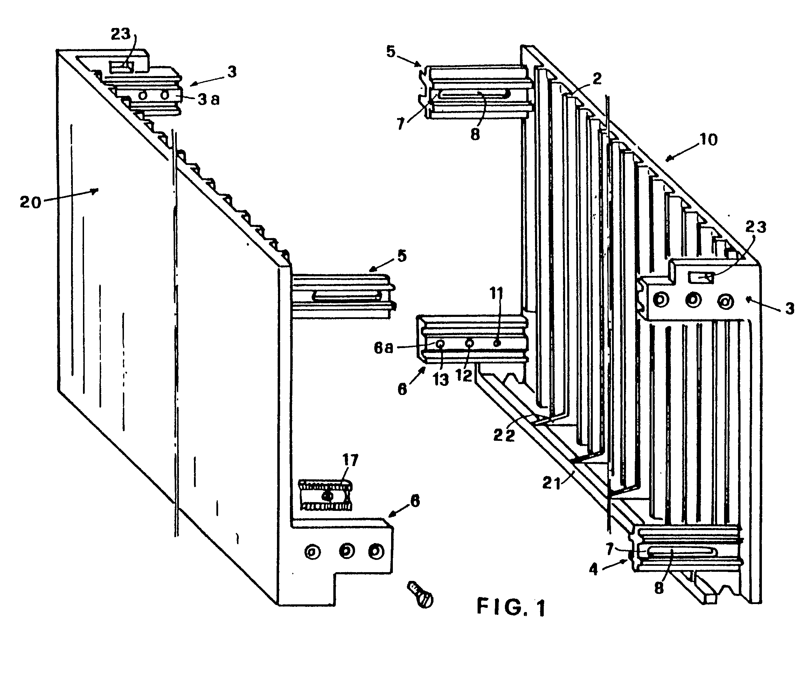

With reference to fig. 1, two equal plates 10 and 20, moulding in plastic material, are the elements which, when joined together, form the basket. Each of said plates presents a flat and smooth surface on one side, while on the other side a series of vertical ribs 2 are obtained by moulding; said ribs being spaced the one from the other by the thickness of the plates which are inserted between then. Four profiled members 3, 4, 5, and 6 being perpendicular to the vertical surface are present.

The profiled members 4 and 5 have a perfectly identical shape. Each of them has a slotted guide 7 in which the slot 8 is obtained; profiled member 5 belonging to element 10 matches profiled member 3 of the opposite plate 20 which is placed in the front. In particular the shaped profile 3a of projection 3 of plate 20 enters into the slotted guide 7 of segment 5. In the same way the slotted guide 7 belonging to segment 4 of plate 10, also having a slot 8 matches the corresponding shaped profile 6a of segment 6 belonging to element 20, which is placed in front of it.

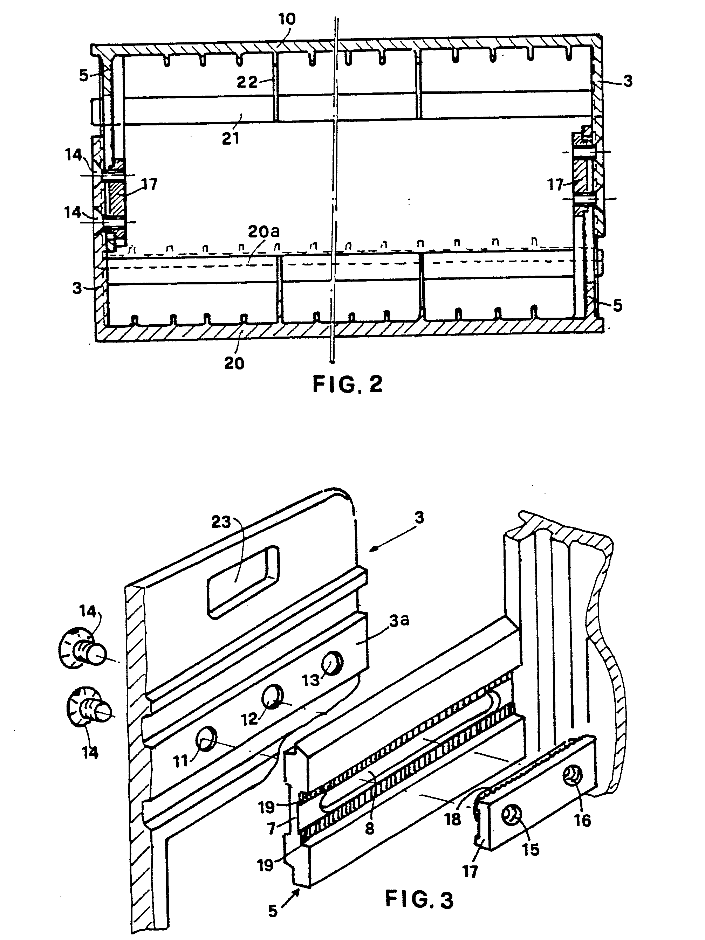

The locking between the profiled members 3 and 5 and between the profiled members 4 and 6 in a certain position is obtained, for each coupling, by means of an indented block. Fig. 3 shows the connection between profiled member 3 of plate 20 and the profiled member 5 of plate 10. The shaped profile 3a of profiled member 3 is provided with three passing holes 11, 12 and 13 which flare out on the external part. Two of these holes, for instance 11 and 12, receive two screws of type 14 which pass through slot 8 and are then screwed into the threaded holes 15 and 16 of block 17. Both the block 17 and the shaped profile 7 of profiled member 5 are provided with indented formations, marked with 18 for block 17 and with 19 for the shaped profile 7, which prevent the mutual sliding between the profiled members 3 and 5. If there were not indented formation sliding would be possible should the screws not be tightened enough or because of the thermic changes which the basket is subject to when it is dipped in the electrolytic bath.

Even though a single screw would be mechanically sufficient to insure the junction between the two profiled members 3 and 5, experience has suggested the use of two locking screws in order to avoid that, because of the effect of deformations due to the temperature of the electrolytic bath, the free end of profiled member 5 could bend, thereby determining the blocking of or the impossibility of inserting the plate to be treated in the position which is closest to this profiled member. Therefore, in the case of maximum opening of the basket, the screws 14 are inserted into the passing holes 12 and 13, while in the case that the opening is adjusted to a smaller width, the screws are preferably inserted into the holes 11 and 12. The possibility of adjusting the opening of the basket is determined, of course, by the length of slot 8 which is present in the profiled members 4 and 5.

The plates in dry-charge batteries inserted into the slots of the basket thus formed rest their lower side on a straight bar 21, which is present in each of the plate 10 and 20. This bar is arranged in a position which is parallel to the gilled surfaces of each element and it is connected to it by means of the protruding ribs 22.

Fig. 2 represents in cross-section the basket formed by the plates 10 and 20 joined with each other. The portion 20a represented by a broken line shows the basket in its most closed position.

Finally it is pointed out that profiled member 3, although it has the same slotted shaped profile as profiled member 6 and although it is also provided with 3 holes for the receiving of the locking screws, presents, unlike profiled member 6, an opening 23 which is meant for the insertion of one of the hooks for the lifting and the transportation of the baskets.

## Claims

1. A basket expecially for supporting plates for batteries, characterised by the fact that it is constituted by the assembly of two equal rectangular plates moulded in plastic material, each presenting a series of vertical ribs defining a grooved wall facing the corresponding grooved wall of the other plate, each plate having in the vicinity of each corner a profiled member projecting perpendicularly from the grooved wall in the direction facing the other plate and engaging each respective member of the other plate, the profile of one diagonally opposite pair of said members being complementary to the other diagonally opposite pair so that they adjustably engage with each other, both members of each pair having an elongated slot in alignment with screw holes provided in the complementary member when engaged therewith, whereby the spacing between the two plates is slidably adjustable by means of screws passing through the respective slot and screw holes of two engaging members.

2. A basket according to claim 1, in which each rectangular plate has an opening (23) in a profiled member to be engaged by hooks.

## Patentansprüche

1. Korb, besonders dazu geeignet, um Akkumulatorenplatten zu stützen, dadurch gekennzeichnet, daß er aus der Zusammensetzung von zwei rechteckigen, gleichen Platten aus gegossenem Kunststoff besteht, indem jede Platte eine Serie von senkrechten Rippen aufweist, die eine gerillte Wand abgrenzen, die gegenüber der anderen gerillten Wand liegt, indem jede Platte in der Nähe jeder Ecke einen profilierten Teil aufweist, der von der gerillten Wand in senkrechter Richtung in Richtung der gegenüberliegenden Platte hinausragt und den anderen entsprechenden Teil der anderen Platte angreift, indem das Profil eines schräg gegenüberliegenden Paars genannter Teile das andere schräg gegenüberliegende Paar ergängzt, damit sie einstellbar in einander greifen, indem beide Teile jedes Paars ein Langloch aufweisen, das zu den auf dem ergänzenden Teil anwesenden Schraubenlöchern fluchtgerecht liegt, wenn sie darin eingegriffen sind, wobei das Raum zwischen den zwei Platten mittels der Schrauben, die durch das entsprechende Langloch und die Schraubenlöchern zwei zusammengegriffener Teile durchgehen, verschiebbar einstellbar ist.

2. Korb nach Anspruch 1, dadurch gekennzeichnet, daß jede rechteckige Platte eine Oeffnung (23) im profilierten Teil aufweist, die von Haken eingegriffen wird.

## Revendications

1. Corbeille particulièrement pour supporter des plaques pour batteries, caractérisée en ce qu'elle consiste en l'assemblage de deux plaques rectangulaires égales moulées en matériel plastique, chacune présentant une série de nervures verticales définissant une paroi à cannelures placée en face de la paroi à cannelures de l'autre plaque, chaque plaque ayant en proximité de chaque angle un membre profilé sailliant perpendiculèrement de la paroi à cannelures en la direction faisant front a l'autre plaque et engageant chaque membre correspondant de l'autre plaque, le profile d'une paire diagonalement opposée de dits membres étant complémentaire à l'autre paire diagonalement opposée, de façon qu'ils s'engagent l'un avec l'autre de façon réglable, l'un et l'autre membre de chaque paire ayant une fente allongée alignée avec des trous de vis pourvus sur le membre complémentaire, quand ils sont engagés l'un avec l'autre, l'espace entre les deux plaques étant réglable à coulisse par le moyen de vis passant à travers la fente respective et les trous de vis de deux membres engageants.

2. Une corbeille selon la revendication 1, caractérisé en ce que chaque plaque rectangulaire a une ouverture (23) sur un membre profilé qui sera engagée par des crochets.

FIG. 1

0 125 672

FIG. 2

FIG. 3